# EUROPÄISCHE PATENTSCHRIFT

(11) **EP 0 924 397 B1**
(45) Veröffentlichungstag und Bekanntmachung des Hinweises auf die Patenterteilung: **04.09.2002**
(21) Anmeldenummer: 98121877.9
(22) Anmeldetag: 18.11.1998
(51) Int. Cl.: F01M 11/08, F01M 1/10

(54) **Einrichtung zur Druck- und/oder Schmiermittelbeaufschlagung eines hydraulischen Verbrauchers in einer Brennkraftmaschine**
Device for feeding fluid and/or lubricant to a hydraulic apparatus in a combustion engine
Dispositif pour alimenter en liquide sous pression ou/et en lubrifiant un appareil hydraulique d'un moteur à combustion interne

(30) Priorität: 17.12.1997 DE 19756018
(43) Veröffentlichungstag der Anmeldung: 23.06.1999
(73) Patentinhaber: Dr.Ing. h.c.F. Porsche Aktiengesellschaft, 70435 Stuttgart (DE); HYDRAULIK-RING GMBH, D-72622 Nürtingen (DE)
(72) Erfinder: Trzmiel, Alfred, 72661 Grafenberg (DE); Stephan, Wolfgang, 73087 Boll (DE); Jochim, Axel-Willi, 72622 Nürtingen (DE)

(56) Entgegenhaltungen:
- DE-A- 3 623 238
- FR-A- 1 124 271
- FR-A- 1 473 127
- GB-A- 2 117 662
- GB-A- 2 231 508
- US-A- 1 775 362
- US-A- 4 614 527
- US-A- 4 714 484

## Beschreibung

Die Erfindung betrifft eine Einrichtung zur Druck- und/oder Schmiermittelbeaufschlagung mindestens eines hydraulischen Verbrauchers in einer Brennkraftmaschine nach der Gattung des Anspruchs 1.

Eine derartige Einrichtung ist beispielsweise aus der DE 36 23 238 C2 bekannt. Diese beschreibt eine Druckmittelversorgung für hydraulische Ventilspielausgleichselemente einer Brennkraftmaschine, die mit im wesentlichen luftfreiem Öl aus dem Schmierölkreislauf versorgt werden sollen. Die Entlüftung des Öls erfolgt dabei über einen Zyklon-Luftabscheider, der druckseitig zwischen der Ölpumpe und dem hydraulischen Verbraucher angeordnet ist. Um eine wirksame Entlüftung des Öls zu erreichen, müssen Zyklon-Luftabscheider aufgrund ihres Wirkungsprinzips mit relativ großen Strömungsgeschwindigkeiten bzw. Strömungsvolumina durchflossen werden. Dazu ist in dieser Druckschrift beschrieben, daß zusätzlich zum Anschluß für das hydraulische Ventilspielausgleichselement mindestens ein Anschluß für weitere Schmiermittelverbraucher vorgesehen ist. Diese Verbraucher sind beispielsweise als Spritzdüsen für die Schmiermittelbeaufschlagung der Nockengleitflächen ausgebildet. Über diese Verbraucher mit relativ großem Schmiermitteldurchsatz wird eine ausreichende Strömungsgeschwindigkeit bzw. ein ausreichender Schmiermitteldurchsatz im Zyklon-Luftabscheider gewährleistet, der eine Entlüftung des Öls ermöglicht.

Aus der gattungsfremden GB 2 117 662 A ist eine Entlüftungseinrichtung für eine Warmwasser - Heizungsanlage bekannt, bei der im Heizungssystem befindliche Luft über zwei Expansionskammern und einen ventilgesteuerten Luftsammelraum nach außen geleitet wird.

Der Erfindung liegt demgegenüber die Aufgabe zugrunde, die gattungsgemäße Einrichtung zur Druck- und/oder Schmiermittelbeaufschlagung mindestens eines hydraulischen Verbrauchers in einer Brennkraftmaschine dahingehend zu verbessern, daß eine wirksame druckseitige Entlüftung auch bei geringen Volumenströmen möglich ist. Darüber hinaus soll diese Einrichtung für die Verwendung bei druckgesteuerten bzw. druckgeregelten Verbrauchern einsetzbar sein.

Diese Aufgabe wird erfindungsgemäß mit den kennzeichnenden Merkmalen des Hauptanspruches gelöst. Durch die Anordnung einer Expansionskammer in der Druckleitung zum Verbraucher, die eine ventilgesteuerte Verbindung zum Vorratstank aufweist, läßt sich eine Entlüftung des Öls auch bei geringen Strömungsgeschwindigkeiten bzw. geringen Strömungsvolumina sicherstellen. Durch die Anordnung dieser Expansionskammer in der Druckleitung wird eine örtliche Verringerung der Strömungsgeschwindigkeit erreicht, die das Herauslösen der Luft aus dem Luft-Ölgemisch verbessert. Diese Anordnung ist darüber hinaus besonders einfach aufgebaut und läßt sich demzufolge kostengünstig herstellen. Weiterhin hat diese erfindungsgemäße Einrichtung den Vorteil, daß sie nur einen geringen zusätzlichen Bauraum beansprucht.

Die Entlüftung des zum Verbraucher geförderten Öls ist besonders wirksam, wenn die ventilgesteuerte Verbindung der Expansionskammer zum Vorratstank zumindest annähernd im Bereich der in Einbau- oder Betriebslage geodätisch höchsten Stelle dieser Expansionskammer angeordnet ist. Durch diese räumliche Anordnung wird die Entlüftung des Öls durch Ausgasen der im Öl gelösten Luft deutlich verbessert.

Die ventilgesteuerte Verbindung der Expansionskammer zum Vorratstank kann dabei auf besonders einfache, kostengünstige und wirksame Weise in Form eines Kugelventils mit kegelförmigen Ventilsitz ausgebildet sein. Ein derartiges Ventil ist besonders einfach und kostengünstig herzustellen und ist auch unter den in Brennkraftmaschinen vorliegenden Arbeitsbedingungen dauerhaft funktionsfähig.

Eine besonders wirksame Entlüftung des Öls ergibt sich, wenn die Ventilkugel mit Spiel in einem entsprechend ausgebildeten Abschnitt der Verbindungsleitung zum Vorratstank ausgebildet ist. Dabei sind die Abmessungen der Ventilkugel und des aufnehmenden Abschnittes der Verbindungsleitung in vorteilhafter Weise so aufeinander abgestimmt, daß sich ein definierter Spalt zwischen Ventilkugel und dem Verbindungsleitungsabschnitt einstellt, so lange die Ventilkugel nicht am Ventilsitz anliegt. Die Abmessungen des Ventilglieds und des aufnehmendes Abschnittes der Verbindungsleitung sind dabei so aufeinander abgestimmt, daß das Ventilglied mit Spiel geführt ist, wobei Luft durch den Ringspalt strömen kann, während das Hindurchtreten von Öl weitgehend verhindert wird.

Weitere Vorteile und vorteilhafte Weiterbildungen der Erfindung ergeben sich aus den Unteransprüchen und der Beschreibung.

Ein Ausführungsbeispiel der Erfindung ist in der nachfolgenden Beschreibung und Zeichnung näher erläutert. Letztere zeigt eine schematische Darstellung der Druckmittelversorgung mit der Entlüftungseinrichtung für einen phasenveränderbaren Nockenwellenantrieb.

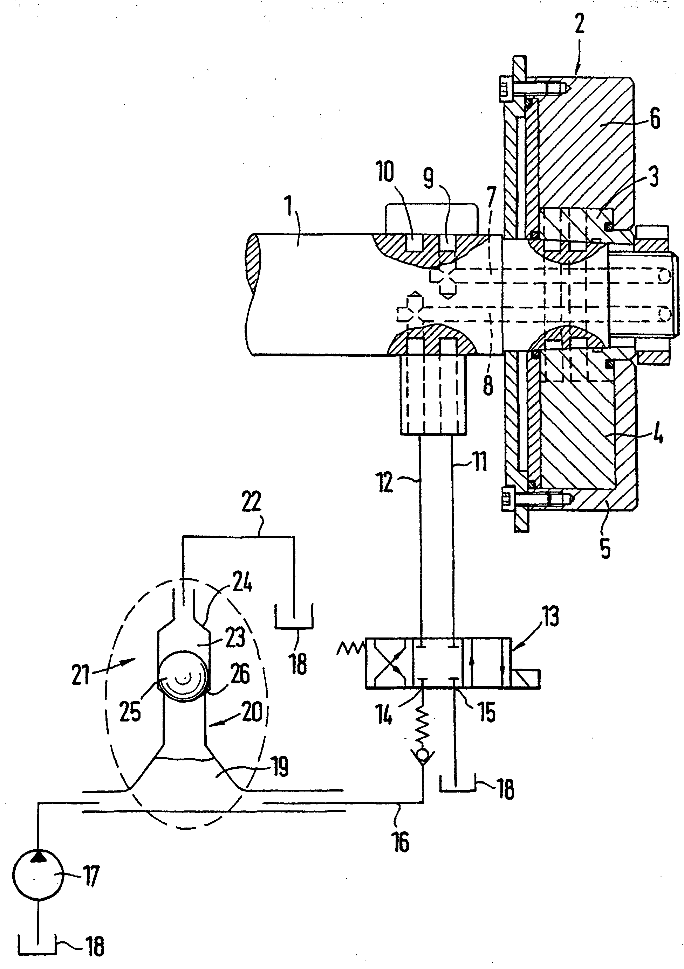

In der Zeichnung ist mit 1 die Nockenwelle einer Brennkraftmaschine bezeichnet, an der endseitig eine beispielsweise aus der DE 39 37 644 A1 bekannte Vorrichtung zur hydraulischen Drehwinkelverstellung der Nockenwelle relativ zu ihrem Antriebsrad bzw. zur Kurbelwelle angeordnet ist. Diese Verstellvorrichtung 2 hat ein drehfest mit der Nockenwelle verbundenes Innenteil 3, das mit radialen Stegen 4 versehen ist. Diese unterteilen die durch radiale Stege 6 begrenzten Zellen eines Zellenrades 5 in jeweils zwei gegensinnig wirkende Druckräume. Das Zellenrad 5 ist gleichzeitig Antriebsrad und beispielsweise mit einem Kettentrieb oder Riementrieb mit der Kurbelwelle der Brennkraftmaschine verbunden. Durch entsprechende Druckbeaufschlagung der Druckräume kann das mit der Nockenwelle 1 verbundene Innenteil 3 relativ zum Zellenrad 5 verdreht werden, so daß sich die Phasenlage der die Gaswechselventile betätigenden Nocken ändern.

Die hydraulische Ansteuerung der Druckräume erfolgt über zwei in der Nockenwelle getrennt voneinander ausgebildeten Druckkanäle 7 und 8, die über zwei in einem Nockenwellenlager 9 ausgebildete Ringnuten 9 und 10 jeweils mit einer Steuerleitung 11 bzw. 12 verbunden sind. Die beiden Steuerleitungen 11 und 12 sind mit einem Steuerventil 13 verbunden, das in diesem Ausführungsbeispiel als 4/3-Wegeventil ausgebildet ist. Das Steuerventil 13 weist einen Druckanschluß 14 und einen Rücklaufanschluß 15 auf. Der Druckanschluß 14 ist über eine Druckleitung 16 mit der als Druckmittelquelle dienenden Schmiermittelpumpe 17 der Brennkraftmaschine verbunden. Diese wiederum ist über eine Saugleitung mit dem Ölvorratstank 18 bzw. der Ölwanne der Brennkraftmaschine verbunden. Der Rücklaufanschluß 15 des Steuerventils ist ebenfalls mit diesem Ölvorratstank 18 verbunden.

In der Neutralstellung des Steuerventils sind sowohl die Druckleitung 16 als auch der Rücklaufanschluß 15 und die beiden Steuerleitungen 11 und 12 ventilseitig verschlossen. In der einen Schaltstellung des Steuerventils 13 ist die Druckleitung 16 mit der Steuerleitung 11 verbunden. Die Steuerleitung 12 wiederum über den Rücklaufanschluß 15 mit dem Ölvorratstank 18 verbunden. In der zweiten Schaltstellung des Steuerventils 13 ist die Druckleitung 16 mit der Steuerleitung 12 verbunden, während die Steuerleitung 11 zum Ölvorratstank 18 geöffnet ist. In den beiden Schaltstellungen I und III des Steuerventils 13 erfolgt aufgrund der in den jeweils angeschlossenen Druckräumen vorherrschenden Druckdifferenzen eine Verdrehung des Innenteils relativ zum Zellenrad. Dabei erfolgt beispielsweise in der Schaltstellung I eine Verdrehung des Innenteils relativ zum Zellenrad im Uhrzeigersinn, während in der Schaltstellung III die relative Verdrehung entgegen dem Uhrzeigersinn erfolgt. In der Neutralstellung II wird die relative Position der beiden verdrehbaren Bauteile der Verstelleinrichtung durch die hydraulische Einspannung beibehalten bzw. festgelegt.

In der Druckleitung 16 ist ein Abschnitt mit vergrößertem Querschnitt ausgebildet, der als Expansionskammer 19 dient. Diese Expansionskammer 19 ist so ausgebildet, daß die Querschnittserweiterung im wesentlichen im oberen, geodätisch höher gelegenen Bereich angeordnet ist. An der Oberseite dieser Expansionskammer 19 ist ein Leitungsabschnitt 20 ausgebildet, der über ein Ventilelement 21 mit einem zum Ölvorratstank 18 führenden Rücklauf 22 verbunden ist. Das Ventilelement 21 besteht im wesentlichen aus einem im Durchmesser vergrößerten Abschnitt 23 des Leitungsabschnittes 20. Das der Expansionskammer 19 abgewandte Ende des Leitungsabschnittes 20 ist als kegelförmiger Ventilsitz 24 ausgebildet. In diesem erweiterten Abschnitt 23 ist ein als Ventilkugel ausgebildetes Ventilglied 25 so mit Spiel geführt, daß dieses zwischen dem Ventilsitz 24 und einer durch den Übergang zum erweiterten Abschnitt 23 ausgebildeten Schulter 26 beweglich ist.

Die Ventilkugel ist mit geringem Spiel innerhalb des Abschnittes 23 geführt. Dieses Spiel zwischen der Innenwand des Abschnittes 23 und dem Ventilkugelumfang ist so bemessen, daß der sich ausbildende Ringspalt groß genug ist, um ein Hindurchtreten von Luft zu ermöglichen, ein Vorbeiströmen von Öl jedoch weitgehend verhindert wird. In diesem Ausführungsbeispiel ist die Ventilkugel aus einem Polyamid (PA 6.6) hergestellt. Ihr Durchmesser beträgt bei 20°C Umgebungstemperatur 10mm. Der die Ventilkugel führende Abschnitt 23 ist aus Aluminium bzw. einer Aluminiumlegierung hergestellt. Sein Durchmesser beträgt bei 20°C Umgebungstemperatur 10,13mm. Durch die unterschiedlichen Werkstoffe und ihre unterschiedlichen Wärmeausdehnungskoeffizienten wird sichergestellt, daß sich der Spalt zwischen der Ventilkugel und dem Leitungsabschnitt mit zunehmender Öl- bzw. Umgebungstemperatur verringert. Die temperaturabhängige Änderung der Ölviskosität wird somit ausgeglichen. Die Abmessungen dieses Ausführungsbeispiels sind anhand der gegebenen Werkstoffkennwerte so gewählt, daß der Spalt zwichen Ventilkugel und dem Leitungsabschnitt bei einer Öltemperatur von etwa 160°C gegen Null geht. Somit ist sichergestellt, daß auch bei sehr hohen Öltemperaturen ein ausreichendes Druckniveau für die Ölversorgung der Verbraucher erreichbar ist.

Im Betrieb der Brennkraftmaschine ist die Druckleitung 16 ständig mit dem Förderdruck der Ölpumpe 17 beaufschlagt. Solange sich das Steuerventil 13 in seiner geschlossenen Neutralstellung II befindet, wird die Ventilkugel 25 durch den Druck in der Druckleitung 16 bzw. der Expansionskammer 19 gegen den Ventilsitz 24 gedrückt. Die Verbindung der Expansionskammer 19 zum Rücklauf 22 ist damit geschlossen. Wird das Steuerventil 13 in eine seiner beiden Schaltstellungen I oder III geschaltet, fällt der Druck in der Druckleitung 16 aufgrund der Druckbeaufschlagung und der Volumenzunahme in den Druckräumen der Verstellvorrichtung etwas ab. Dadurch kann die Ventilkugel bei entsprechender Wirkflächen- und Massenauslegung aufgrund der Schwerkraftwirkung den Ventilsitz freigeben und nach unten sinken, bis sie an der Schulter 26 anliegt. Aufgrund der Querschnittserweiterung verringert sich im Bereich der Expansionskammer 19 die Strömungsgeschwindigkeit des geförderten Öls. Durch die verringerte Strömungsgeschwindigkeit kann die im Öl gelöste Luft im Bereich der Expansionskammer austreten und sich im oberen Bereich der Expansionskammer ansammeln. Durch das zuvor beschriebene Spiel zwischen Ventilkugel und der Innenwand des Abschnittes 23 kann die aus dem Öl austretende Luft über diesen Ringspalt in den Rücklauf 22 gelangen. Steigt im Betrieb der Brennkraftmaschine der Ölstand in der Expansionskammer 19 so weit an, daß kein Luftpolster zur Ventilkugel 25 verbleibt, wird diese durch das ansteigende Öl bzw. den Öldruckanstieg in der Expansionskammer wieder gegen den Ventilsitz 24 gedrückt, so daß die Expansionskammer zum Ölvorratstank wieder verschlossen ist.

Im Gegensatz zum hier dargestellten Ausführungsbeispiel ist es auch möglich, das Ventilglied mit einem Federelement in Richtung auf die Expansionskammer zu beaufschlagen. Dabei sollte dann die Federkraft auf einen entgegenwirkenden Druck von etwa 2 bar ausgelegt sein.

## Patentansprüche

1. Einrichtung zur Druck- und/oder Schmiermittelbeaufschlagung mindestens eines hydraulischen Verbrauchers (2) in einer Brennkraftmaschine mit eine Druckmittelquelle (17), die aus einem Vorratstank (18) versorgt wird, und mit Mitteln zur Entlüftung des Druck- bzw. Schmiermittels, die in der Druckleitung (16) zu dem hydraulischen Verbraucher angeordnet ist, **dadurch gekennzeichnet, daß** die Mittel zur Entlüftung eine Expansionskammer (19) aufweisen, die eine ventilgesteuerte Verbindung (21, 22) zum Vorratstank (18) aufweist.

2. Einrichtung zur Druck- und/oder Schmiermittelbeaufschlagung mindestens eines hydraulischen Verbrauchers in einer Brennkraftmaschine nach Anspruch 1, **dadurch gekennzeichnet, daß** die Verbindung (21, 22) zum Vorratstank (18) zumindest annähernd im Bereich der in Einbau- oder Betriebslage geodätisch höchsten Stelle der Expansionskammer (19) liegt.

3. Einrichtung zur Druck- und/oder Schmiermittelbeaufschlagung mindestens eines hydraulischen Verbrauchers in einer Brennkraftmaschine nach Anspruch 1 oder 2, **dadurch gekennzeichnet, daß** das die ventilgesteuerte Verbindung (21, 22) zum Vorratstank (18) als Entlüftungsventil mit einem als Ventilkugel ausgebildeten Ventilglied (25) und einem als Kegelsitz ausgebildeten Ventilsitz (24) ausgebildet ist.

4. Einrichtung zur Druck- und/oder Schmiermittelbeaufschlagung mindestens eines hydraulischen Verbrauchers in einer Brennkraftmaschine nach einem der vorangehenden Ansprüche, **dadurch gekennzeichnet, daß** das Ventilglied (25) mit Spiel in einem Abschnitt (23) der Verbindungsleitung (20) geführt ist.

5. Einrichtung zur Druck- und/oder Schmiermittelbeaufschlagung mindestens eines hydraulischen Verbrauchers in einer Brennkraftmaschine nach Anspruch 4, **dadurch gekennzeichnet, daß** sich das Spiel zwischen Ventilglied (25) und dem Abschnitt (23) der Verbindungsleitung mit zunehmender Temperatur des Druck- bzw. Schmiermittels verringert.

6. Einrichtung zur Druck- und/oder Schmiermittelbeaufschlagung mindestens eines hydraulischen Verbrauchers in einer Brennkraftmaschine nach einem der vorangehenden Ansprüche, **dadurch gekennzeichnet, daß** das Spiel des Ventilglieds (25) relativ zu dem aufnehmenden Abschnitt (23) der Verbindungsleitung so ausgelegt ist, daß Luft am Ventilglied vorbeiströmen kann, solange dieses nicht am Ventilsitz (24) anliegt, und daß das Hindurchtreten von Schmier- oder Druckmittel zwischen Ventilglied (25) und dem führenden Abschnitt (23) der Verbindungsleitung bei noch nicht am Ventilsitz anliegenden Ventilglied zumindest weitgehend verhindert wird.

7. Einrichtung zur Druck- und/oder Schmiermittelbeaufschlagung mindestens eines hydraulischen Verbrauchers in einer Brennkraftmaschine nach einem der vorangehenden Ansprüche, **dadurch gekennzeichnet, daß** der Verbraucher eine Vorrichtung (2) zur Variation der Ventilsteuerzeiten und/oder des Ventilhubs der Brennkraftmaschine ist.

8. Einrichtung zur Druck- und/oder Schmiermittelbeaufschlagung mindestens eines hydraulischen Verbrauchers in einer Brennkraftmaschine nach einem der vorangehenden Ansprüche, **dadurch gekennzeichnet, daß** der Verbraucher eine Vorrichtung (2) zur Drehlagenänderung der Nockenwelle relativ zur Kurbelwelle ist.

## Claims

1. A device for acting with pressure medium and/or lubricant upon at least one hydraulic consumer device (2) in an internal-combustion engine, having a pressure-medium source (17) supplied from a storage tank (18), and having means for aerating the pressure medium or lubricant respectively, arranged in the pressure line (16) to the hydraulic consumer device, **characterized in that** the means for aerating comprise an expansion chamber (19) comprising a valve-controlled connexion (21, 22) to the storage tank (18).

2. A device for acting with pressure medium and/or lubricant upon at least one hydraulic consumer device in an internal-combustion engine according to Claim 1, **characterized in that** the connexion (21, 22) to the storage tank (18) is situated at least substantially in the region of the physically highest point of the expansion chamber (19) in the fitted or operating position.

3. A device for acting with pressure medium and/or lubricant upon at least one hydraulic consumer device in an internal-combustion engine according to Claim 1 or 2, **characterized in that** the valve-controlled connexion (21, 22) to the storage tank (18) is designed as an aerating valve with a valve member (25) constructed in the form of a valve ball and a valve seat (24) constructed in the form of a conical seat.

4. A device for acting with pressure medium and/or lubricant upon at least one hydraulic consumer device in an internal-combustion engine according to one of the preceding Claims, **characterized in that** the valve member (25) is guided with play in a portion (23) of the connexion line (20).

5. A device for acting with pressure medium and/or lubricant upon at least one hydraulic consumer device in an internal-combustion engine according to Claim 4, **characterized in that** the play between the valve member (25) and the portion (23) of the connexion line is reduced as the temperature of the pressure medium or lubricant respectively increases.

6. A device for acting with pressure medium and/or lubricant upon at least one hydraulic consumer device in an internal-combustion engine according to one of the preceding Claims, **characterized in that** the play of the valve member (25) relative to the receiving portion (23) of the connexion line is arranged in such a way that air can flow past the valve member provided that the latter does not rest against the valve seat (24), and the passage of pressure medium or lubricant between the valve member (25) and the guiding portion (23) of the connexion line is at least substantially prevented while the valve member is not yet resting against the valve seat.

7. A device for acting with pressure medium and/or lubricant upon at least one hydraulic consumer device in an internal-combustion engine according to one of the preceding Claims, **characterized in that** the consumer device is a device (2) for varying the valve-control times and/or the valve stroke of the internal-combustion engine.

8. A device for acting with pressure medium and/or lubricant upon at least one hydraulic consumer device in an internal-combustion engine according to one of the preceding Claims, **characterized in that** the consumer device is a device (2) for altering the rotational position of the camshaft relative to the crankshaft.

## Revendications

1. Dispositif pour alimenter en fluide sous pression et/ou en lubrifiant au moins un organe hydraulique (2) d'un moteur à combustion interne, comportant une source de fluide sous pression (17) qui est alimentée à partir d'un réservoir (18), et comportant des moyens pour purger de l'air le fluide sous pression ou le lubrifiant, qui sont disposés dans la conduite sous pression (16) menant à l'organe hydraulique, **caractérisé en ce que** les moyens de purge d'air comportent une chambre à expansion (19) qui comporte une liaison (21, 22), commandée par soupape, avec le réservoir (18).

2. Dispositif pour alimenter en fluide sous pression et/ou en lubrifiant au moins un organe hydraulique (2) d'un moteur à combustion interne, selon la revendication 1, **caractérisé en ce que** la liaison (21, 22) menant au réservoir (18) se situe au moins approximativement dans la zone de l'emplacement géodésiquement le plus haut, en position de montage ou de fonctionnement, de la chambre à expansion (19).

3. Dispositif pour alimenter en fluide sous pression et/ou en lubrifiant au moins un organe hydraulique (2) d'un moteur à combustion interne, selon la revendication 1 ou 2, **caractérisé en ce que** la liaison (21, 22) commandée par soupape menant au réservoir (18) est réalisée en tant que soupape de purge d'air avec un obturateur de soupape (25) conformé en bille et un siège de soupape (24) conformé en siège conique.

4. Dispositif pour alimenter en fluide sous pression et/ou en lubrifiant au moins un organe hydraulique (2) d'un moteur à combustion interne, selon l'une des revendications précédentes, **caractérisé en ce que** l'obturateur de soupape (25) est guidé avec jeu dans un tronçon (23) de la conduite de liaison (20).

5. Dispositif pour alimenter en fluide sous pression et/ou en lubrifiant au moins un organe hydraulique (2) d'un moteur à combustion interne, selon la revendication 4, **caractérisé en ce que** le jeu entre l'obturateur de soupape (25) et le tronçon (23) de la conduite de liaison diminue lorsqu'augmente la température du fluide sous pression ou du lubrifiant.

6. Dispositif pour alimenter en fluide sous pression et/ou en lubrifiant au moins un organe hydraulique (2) d'un moteur à combustion interne, selon l'une des revendications précédentes, **caractérisé en ce que** le jeu de l'obturateur de soupape (25) par rapport au tronçon (23) le recevant de la conduite de liaison est dimensionné de manière que l'air puisse circuler devant l'obturateur de soupape tant que celui-ci ne s'applique pas contre le siège de soupape (24), et **en ce que** le passage de lubrifiant ou de fluide sous pression entre l'obturateur de soupape (25) et le tronçon (23) le guidant de la conduite de liaison est au moins empêché en grande partie lorsque l'obturateur de soupape ne s'applique pas encore contre le siège de soupape.

7. Dispositif pour alimenter en fluide sous pression et/ou en lubrifiant au moins un organe hydraulique (2) d'un moteur à combustion interne, selon l'une des revendications précédentes, **caractérisé en ce que** l'organe est un dispositif (2) destiné à faire varier les temps de commande des soupapes et/ou la course des soupapes du moteur à combustion interne.

8. Dispositif pour alimenter en fluide sous pression et/ou en lubrifiant au moins un organe hydraulique (2) d'un moteur à combustion interne, selon l'une des revendications précédentes, **caractérisé en ce que** l'organe est un dispositif (2) destiné à faire varier la position de rotation de l'arbre à came par rapport au vilebrequin.
